# EUROPEAN PATENT APPLICATION

(11) **EP 1 547 754 A1**
(43) Date of publication of application: **29.06.2005**
(21) Application number: 03798446.5
(22) Date of filing: 22.09.2003
(51) Int. Cl.: B29C 55/02

(54) **STRONGLY STRETCHED ALIPHATIC POLYESTER MOLDINGS**

(30) Priority: 25.09.2002 JP 2002278726
(71) Applicant: Kureha Chemical Industry Co., Ltd., Tokyo 103-8552 (JP)
(72) Inventor: ITOH, Daisuke,c/o PACKAGING MATERIALS RESEARCH LAB, Tamari-Mura,Niihari-Gun,Ibaraki 311-3436 (JP); SATO, Takashi,c/o PACKAGING MATERIALS RESEARCH LAB, Tamari-Mura,Niihari-Gun,Ibaraki 311-3436 (JP); ICHIKAWA, Yukio,c/o PACKAGING MATERIALS RES. LAB., Tamari-Mura,Niihari-Gun,Ibaraki 311-3436 (JP)
(74) Representative: Albrecht, Thomas, Dr.
(86) International application number: PCT/JP2003/012089
(87) International publication number: WO 2004/028783

(57) **Abstract**

A crystalline aliphatic polyester alone or a laminate thereof is subjected to intense stretching under appropriately set stretching conditions to provide a stretched product with remarkably improved physical properties as represented by impact resistance and gas-barrier property inclusive of hot water resistance. The thus-obtained stretched product of aliphatic polyester is provided with increased orientation degree at not only amorphous parts but also crystalline parts as represented by (a) remarkably higher crystal melting point compared with the unstretched product, (b) an increase in sub-dispersion peak temperature according to dynamic viscoelasticity measurement, or (c) an increase in orientation degree according to wide-angle X-ray diffractometry and an increase in main dispersion peak temperature according to dynamic viscoelasticity measurement.

## Description

### [TECHNICAL FIELD]

The present invention relates to a stretched product of crystalline aliphatic polyester provided with improved properties, inclusive of retort durability, gas-barrier property and strength, through intense stretching.

### [BACKGROUND ART]

The technique of stretching in a uniaxial direction or biaxial directions has been widely adopted, for the purpose of, e.g., enhancing various properties such as strength and barrier property, and providing heat-shrinkability. The stretching operation is generally applied to amorphous (non-crystalline) or low-crystalline resins, and even where applied to a semi-crystalline polymer, the stretching has been considered to principally cause a tension of polymer chains at the amorphous parts and not to essentially affect the crystalline parts of the polymer. Some reports have been made on stretching of crystalline resins, such as ethylene-vinyl alcohol copolymer (EVOH) and polypropylene. However, the stretching of EVOH was applied to only a laminate thereof with another resin, such as polyamide. With respect to polypropylene, the spherulites thereof were destroyed, rather than stretched, to provide an apparently stretched state. ("Polypropylene biaxial orientation from a morphological view point", Soc. Plast. Eng. Annu. Tech. Conf., Vol. 45, pp. 189-193 (1987))

On the other hand, aliphatic polyesters, such as polyglycolic acid (PGA, including polyglicolide), polylactic acid (PLA), polytrimethylene carbonate (PTMC) and polycaprolactone (PCL), can be decomposed by microorganisms or enzymes present in nature, such as soil or sea water, because of aliphatic ester structure contained in their molecular chains, and are therefore noted as biodegradable polymer materials giving little load to the environment. Among them, polyglycolic acid is excellent in heat resistance, gas-barrier property, mechanical strength, etc., and therefore the development of new use thereof has been proposed (JP-A 10-60136, JP-A 10-80990, JP-A 10-138371 and JP-A 10-337772, corresponding to US-A 5853639, US-A 6245437, EP-A 0925915 and US-A 6001439, respectively). Accordingly, it has been naturally tried to modify the properties of such aliphatic polyesters by stretching thereof (e.g., JP-A 10-337772 mentioned above).

However, aliphatic polyesters, as represented by polyglycolic acid, generally have a crystallinity, which has an aspect not suitable for modification of the properties through stretching as mentioned above. More specifically, during a period of heating for facilitating the stretching, the crystallization of the polymer is considered to proceed, thereby making it difficult to modify the physical properties by intense stretching thereof, and actually, if a substantially crystallized aliphatic polyester is stretched at, e.g., a stretching ratio exceeding three times in each of biaxial directions, the texture of the polymer is sometimes broken to rather result in a lowering in physical property, such as strength.

Moreover, as an aliphatic polyester is rich in hydrophilicity because of its ester bond, when a stretched product thereof is subjected to a retort treatment with hot water, particularly a high-temperature retort treatment, the effect of stretching imparted with difficulty is liable to be lost.

### [DISCLOSURE OF INVENTION]

Accordingly, a principal object of the present invention is to provide an intensely stretched product of aliphatic polyester.

Another object of the present invention is to provide a stretched product of aliphatic polyester with a durability against a high-temperature retort treatment.

As a result of our study with the above-mentioned objects, it has been found that even a crystalline aliphatic polyester can be subjected to intense stretching at stretching ratios exceeding three times for each of longitudinal and transverse biaxial directions if the stretching conditions are appropriately selected, and that the aliphatic polyester stretched product thus intensely stretched is provided with not only an orientation effect attributable to tension of polymer chains at the amorphous parts as conventionally recognized with various thermoplastic resins but also a modification of crystallinity recognizable as a consequence of tensional orientation at the crystalline parts, resulting in remarkable improvements in strength and heat resistance correspondingly.

Based on the above findings, according to a first aspect of the present invention, there is provided a stretched product of crystalline aliphatic polyester, having a crystal melting point higher by at least 3 °C than that of an unstretched product thereof. It is understood as a very unique phenomenon that a crystal melting point as a representative crystalline property is increased as a result of stretching which is a kind of physical treatment.

The stretched product of crystalline aliphatic polyester retains an effect of intense stretching also at its amorphous parts. More specifically, according to a second aspect of the present invention, there is provided a stretched product of crystalline aliphatic polyester, showing a sub-dispersion peak temperature of at least -46 °C according to dynamic viscoelasticity measurement in at least one direction thereof. Herein, a sub-dispersion peak in dynamic viscoelasticity measurement is attributable to a local mode relaxation at the amorphous parts, and an increase in peak temperature thereof represents a large stretching effect at the amorphous parts.

Further, as is understood from the above description, the stretched product of crystalline aliphatic polyester according to the present invention includes both a crystalline part and an amorphous part which have been respectively intensely stretched. Thus, according to a third aspect of the present invention, there is provided a stretched product of crystalline aliphatic polyester, showing a main dispersion peak temperature of at least 67 °C according to dynamic viscoelasticity measurement in at least one direction thereof and an orientation degree of at least 83 % according to wide-angle X-ray diffractometry in at least one direction thereof. Among these, a main peak in dynamic viscoelasticity measurement is attributable to glass transition of the amorphous parts, and an increase in peak temperature thereof represents a large stretching effect at the amorphous parts. On the other hand, a high orientation degree as measured according to wide-angle X-ray diffractometry represents a high crystalline orientation degree. In the above, "at least one direction" means at least one of a longitudinal direction and a transverse direction in the stretching.

It has been also confirmed that, along with the above-mentioned changes in physical properties attributable to intense stretching, the stretched product of crystalline aliphatic polyester according to the present invention shows a remarkably increased impact resistance and heat resistance as represented by an effect that it effectively retains a gas-barrier property provided with the stretching even after a high-temperature retort treatment.

### [DESCRIPTION OF THE BEST MODE FOR PRACTICING THE INVENTION]

The aliphatic polyesters constituting the stretched product according to the present invention may include homopolymers and copolymers of aliphatic ester monomers, inclusive of : glycolic acids including glycolic acid and glycolide which is a bimolecular cyclic ester of glycolic acid; cyclic monomers, inclusive of ethylene oxalate (i.e., 1,4-dioxane-2, 3-dione); lactides; lactones, such as β-propiolactone, β-butyrolactone; pivalolactone, γ -butyrolactone, δ-valerolactone, β-methyl-δ-δ-valerolactone, and ε-caprolactone; carbonates, such as trimethylene carbonate; ethers, such as 1,3-dioxane; ether-esters, such as dioxanone; and amides, such as ε-caprolactam; hydroxycarboxylic acids, such as lactic acid, 3-hydroxypropanoic acid, 3-hydroxybutanonic acid, 4-hydroxybutanonic acid and hydroxycaproic acid, and their alkyl esters; substantially equal molar mixtures of aliphatic diols, such as ethylene glycol and 1,4-butane diol with aliphatic dicarboxylic acids, such as succinic acid and adipic acid, and their alkyl or aromatic esters. Among these, it is preferred to use a polymer of hydroxycarboxylic acid in view of heat resistance, particularly a glycolic acid polymer comprising a homopolymer or a copolymer of glycolic acid, which is excellent in heat resistance, gas-barrier property and mechanical strength.

More specifically, the glycolic acid polymer used in the present invention is a homopolymer or a copolymer comprising a recurring unit represented by a formula (1) below:

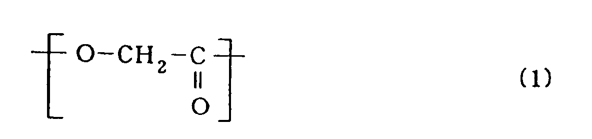

The content of the recurring unit represented by the formula (1) may be at least 60 wt. %, preferably at least 70 wt.%, more preferably at least 80 wt.%. The upper limit thereof is 100 wt. %. If the content of the recurring unit of the formula (1) is too little, the gas-barrier property and heat resistance are lowered.

The glycolic acid polymer may be made a glycolic acid copolymer which is caused to contain at least one recurring unit, e.g., represented by any of formulae (2) to (6) shown below in addition to the recurring unit of the formula (1). 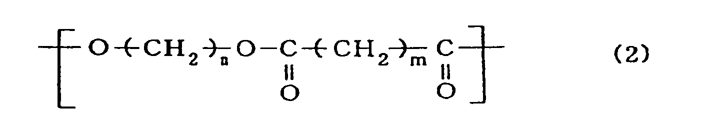 (wherein, n=1-10, m=0-10), 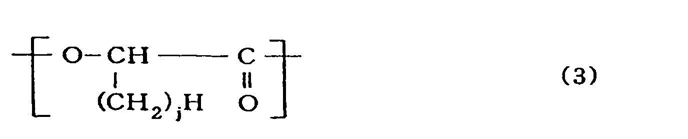 (wherein, j=1-10), 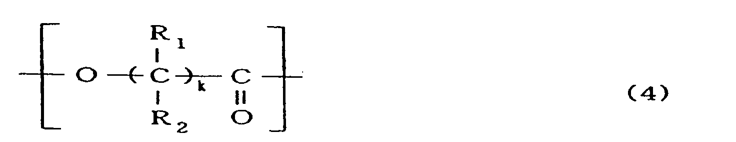 (wherein, R₁ and R₂ independently denote a hydrogen atom or an alkyl group having 1-10 carbon atoms. k=2-10), 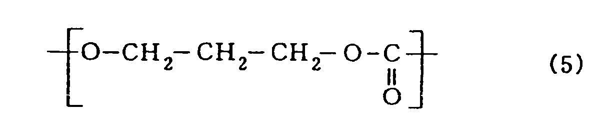 and

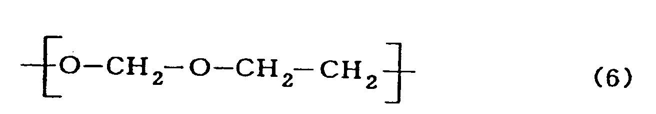

By introducing such another recurring unit represented by these formulae (2) to (6) in a proportion of 1 wt.% or more, the melting point of polyglycolic acid as the homopolymer can be lowered. If the melting point of polyglycolic acid is lowered, the processing temperature thereof can be reduced, and the thermal decomposition during melt-processing thereof can be reduced. Further, by the copolymerization, the crystallizing speed of polyglycolic acid can be reduced to improve the processability. If the content of another recurring unit in the copolymer is excessively increased, the crystallinity inherently possessed by polyglycolic acid is liable to be lost, thus adversely affecting the gas-barrier property.

The glycolic acid polymer may be synthesized by, e.g., dehydro-polycondensation of glycolic acid, de-alcohol polycondensation of glycolic acid alkyl ester or ring-opening polymerization of glycolide. Among these, it is preferred to adopt the ring-opening polymerization of glycolide in the presence of a small amount of catalyst (e.g., organic carboxylic acid-based and metal halide-based cationic catalysts) under heating at a temperature of ca. 120 °C to ca. 250 °C , thereby producing polyglycolic acid (which may also be called "polyglycolide"). The ring-opening polymerization may preferably be effected by a bulk polymerization process or a solution polymerization process.

The glycolic acid copolymer may be synthesized according to the above-mentioned respective synthesis processes, by copolymerizing glycolide, glycolic acid or a glycolic acid alkyl ester in appropriate combination with a comonomer selected from: cyclic monomers, inclusive of ethylene oxalate (i.e., 1,4-dioxane-2,3-dione); lactides; lactones, such as β-propiolactone, β-butyrolactone; pivalolactone, γ-butyrolactone, δ-valerolactone, β-methyl-δ-valerolactone, and ε-caprolactone; carbonates, such as trimethylene carbonate; ethers, such as 1,3-dioxane; ether-esters, such as dioxanone; and amides, such as ε-caprolactam; hydroxycarboxylic acids, such as lactic acid, 3-hydroxypropanoic acid, 3-hydroxybutanonic acid, 4-hydroxybutanonic acid and hydroxycaproic acid, and their alkyl esters; substantially equal molar mixtures of aliphatic diols, such as ethylene glycol and 1,4-butane diol with aliphatic dicarboxylic acids, such as succinic acid and adipic acid, and their alkyl or aromatic esters; or two or more species of the comonomers.

Among these, in view of easy copolymerizability and easiness of obtaining copolymers with excellent physical properties, it is preferred to use cyclic compounds, such as lactide, caprolactone, and trimethylene carbonate; and hydroxycarboxylic acids, such as lactic acid. Such a comonomer may be used in a proportion of ordinarily at most 45 wt.%, preferably at most 30 wt.%; more preferably at most 10 wt.%, of the total charge monomers. If the proportion of the comonomer is increased, the crystallinity of the resultant polymer is liable to be impaired. The glycolic acid polymer causes a lowering in heat resistance, gas-barrier property, mechanical strength, etc., if it loses crystallinity.

The glycolic acid polymer used in the present invention may preferably have a melt viscosity of 100-10,000 Pa · s, more preferably 300-8,000 Pa · s, particularly preferably 400-5,000 Pa · s, when measured under the conditions of a temperature of 240 °C and a shear rate of 100 sec⁻¹.

Incidentally, glycolic acid homopolymer has a melting point (Tm) of ca. 215-220 °C , a glass transition temperature of ca. 38 °C and a crystallization temperature of ca. 91 °C. These thermal properties can vary depending on the molecular weight and copolymerization component of the glycolic acid polymer.

In the present invention, a neat resin of the glycolic acid polymer can be used alone, but it is possible to use a resin composition obtained by incorporating into the glycolic acid polymer an inorganic filler, another thermoplastic resin, a plasticizer, etc., within an extent of not adversely affecting the object of the present invention. Further, the glycolic acid polymer can be caused to contain various additives, as desired, such as a heat stabilizer, a light stabilizer, a moisture-proofing agent, a water-proofing agent, a water repellent, a lubricant, a release agent, a coupling agent, an oxygen absorber, a pigment, and a dye.

In order to improve the melt stability of the glycolic acid polymer, it is preferred to add a heat stabilizer, examples of which may include: phosphoric acid esters having a pentaerythritol skeleton, phosphorus compounds having at least one hydroxyl group and at least one long-chain alkyl ester group, a heavy metal-inactivating agent, and a metal carbonate. These heat stabilizers may respectively be used alone or in combination of two or more species.

The aliphatic polyesters used in the present invention including the above-mentioned glycolic acid polymer generally have a crystallinity though the degrees can be different. The crystallinity can be confirmed by a heat-absorption peak accompanying crystal melting in a temperature region of at least ca. 160 °C , particularly at least ca. 180 °C, when a sample resin is subjected to differential scanning calorimetry (DSC).

A stretched product of aliphatic polyester according to the present invention may be obtained by subjecting a single layer of or a laminate with another thermoplastic resin layer of such an aliphatic polyester to intense stretching under appropriate conditions. It has been particularly found that a glycolic acid polymer inclusive of homopolymer or copolymer of glycolic acid has a broad latitude of stretching in lamination with a layer of another thermoplastic resin.

Examples of such another resin may include:
polyolefin resins, thermoplastic polyester resins, polystyrene resins, chlorine-containing resins, polyamide resins; polycarbonate resins, cyclic olefin resins, polyurethane resins, polyvinylidene chloride resins, ethylene-vinyl alcohol copolymer (EVOH), and aliphatic polyester resins.

In such a laminate, it is possible to insert an adhesive resin layer between the respective layers for the purpose of, e.g., enhancing the inter-layer peeling strength. Such an adhesive resin (or simply an adhesive) may preferably be one which can be easily processed by extrusion and exhibits a good adhesion with the respective resin layers.

Examples of such an adhesive resin may include: maleic anhydride-modified polyolefin resin("MODIC S525", made by Mitsubishi Jushi K.K.), glycidyl group-containing ethylene copolymer ("REXPEARL RA3150", made by Nippon Sekiyu K.K.; "BONDFAST 2C", made by Sumitomo Kagaku K.K.), thermoplastic polyurethane ("KURAMILON 1195L", made by Kuraray K.K.), polyamide ionomer ("AM 7926", made by Mitsui Dupont K.K.), polyacrylimide resin ("XHTA", made by Rohm & Haas Co.), acid-modified low-density polyethylene ("ADMER NF-550", made by Mitsui Kagaku K.K.; MFR=6.2g/10 min. (Temp.: 190 °C, Load: 2160g-wt.)), and "MODIC S525", made by Mitsubishi Kagaku K.K.

In order to effect intense stretching of the above-mentioned single layer of or the laminate with another layer of the glycolic acid polymer (primary form), it is extremely important to appropriately set the stretching conditions. More specifically, while it is generally necessary to pre-heat the primary form to a stretching temperature higher than room temperature for effecting the stretching, it is necessary, in this instance, to effect the pre-heating to the stretching temperature as quickly as possible and quickly effecting a desired degree of stretching on reaching the stretching temperature.

In the case of a glycolic acid polymer as a representative, the stretching has been conventionally performed after retaining it at the stretching temperature for ca. 10 minutes, but this causes a substantial degree of crystallization at the stretching temperature, whereby it becomes difficult to effect such an intense degree of stretching as to provide a stretching ratio in excess of 3 times at least in a uniaxial direction, preferably in excess of 3 times in each of biaxial directions, and even if the intense stretching is forcibly performed, any improvement in physical properties cannot be expected ordinarily.

According to our findings, in order to effect such a degree of intense stretching as to provide physical properties characterizing the stretched product of the present invention with respect to the glycolic acid polymer, it is preferred to set the stretching temperature to below 80 °C, preferably 45-60 °C, shorten the heating time from room temperature to the stretching temperature to below ca. 60 sec., more preferably below ca. 30 sec., immediately starting the stretching on reaching the stretching temperature, and completing the stretching as soon as possible, preferably within ca. 1-20 sec., more preferably within ca. 1-5 sec. It is preferred that the stretching is performed at a ratio of above 3 times, more preferably 3.5-5.0 times, further preferably 4.0-4.5 times, in at least a uniaxial direction, preferably in biaxial directions.

It is also preferred after the stretching, to heat-treat the stretched product by holding it at a temperature of 100-210 °C, more preferably 120-200 °C, for a period of, e.g., ca. 10 sec.-20 min. in the case of dry heating, thereby providing the stretched product with a heat resistance durable against a high-temperature retort treatment, etc., and aiming at a further improved gas-barrier property. By a wet heat treatment with hot water or steam, the heat-treatment time can be reduced down to ca.1-ca.5 sec.

By cooling to room temperature after the heat treatment, a stretched product according to the present invention can be obtained.

As described above, as a result of the above-mentioned series of production process, the aliphatic polyester stretched product is provided with a crystal melting point which is higher by at least 3 °C, preferably at least 5 °C, further, preferably at least 7 °C , than that of the yet-understood product.

According to another aspect, the aliphatic polyester stretched product of the present invention is provided with a sub-dispersion peak temperature of at least -46 °C, preferably at least -45 °C according to dynamic viscoelasticity measurement in at least one direction thereof.

According to a still another aspect, the aliphatic polyester stretched product of the present invention is provided with a main dispersion peak temperature of at least 67 °C, preferably at least 70 °C , according to dynamic viscoelasticity measurement in at least one direction thereof, and an orientation degree of at least 83 %, preferably at least 84 %, according to wide-angle X-ray diffractometry in at least one direction thereof.

The stretched product of a single layer of or a laminate with another thermoplastic resin of the aliphatic polyester obtained in the above-described manner can be further subjected to co-extrusion processing or lamination processing with another thermoplastic layer optionally by using an adhesive agent. The aliphatic polyester stretched product according to the present invention may further include such a laminate-form product.

The aliphatic polyester stretched product of the present invention may assume an entire shape of a film or sheet; a blow-molded container or bottle; a tray, a cup or a lid by sheet molding; a bag-form container, or a tubular packaging material. A film or sheet is ordinarily further processed into a shape of a cup, a tray or a bag-form container.

Accordingly, a primary form of the above-mentioned single layer of or a laminate with another resin of aliphatic polyester may assume a form of a flat sheet, parison, preform, etc., and in the course of a tenter treatment, blow molding or vacuum forming thereof, the above-mentioned stretching is performed.

As specific application embodiments thereof, the stretched product of the present invention may assume various forms of multi-layered bottles and packaging materials including a layer of a gas-barrier resin such as EVOH, wherein the gas-barrier layer is replaced by the aliphatic polyester.

### [Examples]

Hereinbelow, the present invention will be described more specifically based on Examples and Comparative Examples. Measurement methods of physical properties, etc., are as follows.
(1) Crystal melting point (Tm) according to DSC
   A sample in a weight of ca. 5 mg was subjected to a measurement at a temperature-raising rate of 20 °C/min. in a temperature range of -20 °C to 280 °C by using a differential scanning calorimeter ("DSC-60A", made by K.K. Shimadzu Seisakusho). A maximum peak on the heat-absorption side of the temperature curve was taken as a crystal melting point Tm (°C).
(2) Main dispersion peak temperature and Sub-dispersion peak temperature according to dynamic viscoelasticity measurement.
   A sample was left standing in an environment of 23 °C and 50 % RH(relative humidity) and then subjected to measurement of loss tangent (tan δ) at respective temperatures in a temperature range of from -110 °C to 150 °C by using a dynamic viscoelasticity measurement apparatus ("RSA II", made by Rheometrics, Inc.) at a measurement frequency of 10 Hz and a temperature-raising rate of 2 °C/min. Peak-top temperatures on a lower-temperature side and a higher-temperature side on the resultant temperature dispersion curve were taken as a sub-dispersion peak temperature and a main dispersion peak temperature (°C), respectively.
(3) Orientation degree measured according to wide-angle X-ray diffractometry.
   Sample films were stacked with their stretched direction in alignment with each other so as to provide a width of 1 mm, a length of 20 mm and a thickness of 3 mm and fixed with a cyanoacrylate-based adhesive, and an X ray was incident in parallel to the film surface (in the edge direction) and photographed on an imaging plate. The X-ray generation apparatus was "ROTAFLEX RU-200B" (made by Rigaku Denki K.K.), and CuKα rays obtained at 30 kV-100 mA through a Ni filter were used as an X-ray source. The imaging plate was "BAS-SR 127" (made by Fuji Film K.K.) and exposed for a period of 20 min. at a sample-imaging plate distance of 60 mm. The reading of the diffraction image was made by using "R-AXIS DS3" made by Rigaku Denki K.K., to prepare a diffraction azimuth (β angle) intensity distribution curve from (110) plane of polyglycolic acid crystal. From the β angle-intensity distribution curve, half-value widths W₉₀ and W₂₇₀ were measured at two points (β angles= 90 deg., and 270 deg.) on the equatorial line, and from the total of W₉₀ and W₂₇₀ values, an orientation degree (%) was obtained according to the following formula (according to a method of measuring orientation degree described at page 81 of "X-ray Manual (Revised Third Edition) published from June 30, 1985 by Rigaku Denki K.K.) Orientation degree (%)=[(360-(W₉₀+W₂₇₀))/360]×100
(4) Oxygen gas permeation coefficient (PO₂)
   Measured according to JIS K-7126 by using "OX-TRAN 2/20" (made by Modern Control Co.) under the conditions of temperature=23 °C and relative humidity = 80 %.
(5) Retort treatment
   Samples for the retort treatment were formed by laminating a 100 µm-thick sheet of C-PP (unstretched PP) on both sides of stretched films obtained in Examples and Comparative Examples. A two-liquid curing type adhesive ("A-606" and "A-50", made by Takeda Yakuhin Kogyo K.K.) was used for the lamination, and after the lamination, each laminate sample was aged for 3 days at 40 °C. The retort treatment was performed according to a hot bath-method at 105 °C-30 min. or 120 °C-30 min.
(6) Anti-impact strength
   Anti-impact force and energy were measured according to ASTM D3763 by using "DROP-WEIGHT TESTER" (made by Rheometrics, Inc.) The support ring diameter was 1.5 inches and the probe was 100 pounds.

### [Examples 1-4]

Polyglycolic used was homopolymer showing a melt viscosity of 2,500 Pa · s as measured at a temperature of 240 °C and a shear rate of 100 sec⁻¹. The polyglycolic acid in 100 wt. parts together with 0.1 wt. part of phosphite-type anti-oxidant ("PEP-8", made by Asahi Denka Kogyo K.K.) was pelletized.

From the PGA pellets, cast sheets (thickness = 100 µm) were prepared according to the T-die method at extrusion temperatures of 250 °C to 280 °C. The sheets were subjected to simultaneous biaxial stretching by using a biaxial stretching machine (made by Toyo Seiki K.K.) at 45 °C or 65 °C (as shown in Table 1 below), a stretching speed of 7m/min. (140 %/sec.) and stretching ratios of 4.0 × 4.0 times or 4.5 × 4.5 times (as shown in Table 1 below) and then heat-treated at 120 °C for 15 min. while being fixed on the biaxial stretching machine to obtain films of ca. 3 µm or 6 µm in thickness. The pre-heating time up to the stretching temperature was set to ca. 30 sec., in each case. As is understood from the stretching speed (of 7m/min= 140 %/sec.), the time from the start to competition of the stretching was within ca. 3 sec. (ca. 1.5 sec.-2.5 sec.)

### [Comparative Examples 1-5]

Cast sheets obtained in the same manner as in the above Examples were stretched under the conditions shown in Table 1 to obtain films of 3-6 µm.

### [Comparative Example 6]

A cast sheet extruded in the same manner as in the above Examples was used in an unstretched state.

The respective films obtained in the above Examples and Comparative Examples were subjected to measurement of the crystal melting point (Tm), crystalline orientation degree (%) according to wide-angle X-ray diffractometry, main dispersion and sub-dispersion peak temperatures according to dynamic viscoelasticity measurement, and further measurement of anti-impact strength. The results are inclusively shown in Table 1 below.

Further, the respective films were laminated with a 100 µm-thick C-PP sheet on both sides and subjected to a retort treatment at 105 °C × 30 min. or 120 °C × 30 min. The resultant films and the sample films before the retort treatment were respectively subjected to measurement of oxygen gas permeability coefficient (PO₂) in the above-described manner. The results are inclusively shown in Table 2 appearing hereinafter.

**Table 1**

| Example | Stretching | | Crystal melting point | Wide angle X-ray diffraction | Dynamic viscoelasticity measurement | | Anti-impact strength | |
|---|---|---|---|---|---|---|---|---|
| | temp (°C) | ratio (times) | Tm (°C) | Orientation deg. (%) | Main dispersion peak temp. (°C) | Sub-dispersion peak temp. (°C) | Force (N) | Energy (J) |
| 1 | 45 | 4.0×4.0 | 224 | 85 | 67 | -45 | 285 | 1.21 |
| 2 | 45 | 4.5 ×4.5 | 225 | 84 | 70 | -45 | 238 | 0.92 |
| 3 | 60 | 4.0×4.0 | 225 | 85 | 70 | -44 | 146 | 0.63 |
| 4 | 60 | 4.5×4.5 | 225 | 84 | 71 | -43 | 195 | 0.77 |
| Comp. 1 | 45 | 3.0×3.0 | 218 | 82 | 63 | -47 | 101 | 0.40 |
| Comp. 2 | 60 | 3.0×3.0 | 216 | 81 | 67 | -48 | 49 | 0.21 |
| Comp. 3 | 80 | 3.0×3.0 | 217 | 84 | 64 | -48 | 76 | 0.25 |
| Comp. 4 | 80 | 4.0×4.0 | 217 | 81 | 70 | -49 | 112 | 0.43 |
| Comp. 5 | 80 | 4.5×4.5 | 217 | 82 | 69 | -48 | 64 | 0.20 |
| Comp. 6 | - | unstretched | 216 | 0 | 45 | -49 | 5 | 0.01 |

**Table 2**

| Example | Stretching | | Oxygen permeability (PO₂)* | | |
|---|---|---|---|---|---|
| | temp (°C) | ratio (times) | Before retorting | After retorting at 105 °C | After retorting at 120 °C |
| 1 | 45 | 4.0×4.0 | 1.3 × 10⁻¹⁴ | 2.8 × 10⁻¹⁴ | 7.3 × 10⁻¹⁴ |
| 2 | 45 | 4.5×4.5 | 1.1 × 10⁻¹⁴ | 3.0 × 10⁻¹⁴ | 8.0 × 10⁻¹⁴ |
| 3 | 60 | 4.0×4.0 | 1.1 × 10⁻¹⁴ | 2.8 × 10⁻¹⁴ | 6.0 × 10⁻¹⁴ |
| 4 | 60 | 4.5×4.5 | 1.2 × 10⁻¹⁴ | 3.0 × 10⁻¹⁴ | 8.8 × 10⁻¹⁴ |
| Comp. 1 | 45 | 3.0×3.0 | 1.7 × 10⁻¹⁴ | 2.7 × 10⁻¹⁴ | 68 × 10⁻¹⁴ |
| Comp. 2 | 60 | 3.0×3.0 | 2.2 × 10⁻¹⁴ | 2.7 × 10⁻¹⁴ | 14 × 10⁻¹⁴ |
| Comp. 3 | 80 | 3.0×3.0 | 1.7 × 10⁻¹⁴ | 3.0 × 10⁻¹⁴ | 20× 10⁻¹⁴ |
| Comp. 4 | 80 | 4.0×4.0 | 2.3 × 10⁻¹⁴ | 4.3 × 10⁻¹⁴ | 18 × 10⁻¹⁴ |
| Comp. 5 | 80 | 4.5×4.5 | 1.4 × 10⁻¹⁴ | 7.5 × 10⁻¹⁴ | 36 × 10⁻¹⁴ |
| Comp. 6 | - | unstretched | 7.8 × 10⁻¹⁴ | --** | --** |

| | | | | | |
|---|---|---|---|---|---|
| *: Units of PO₂: cm³.cm./cm².sec.cmHg (The thickness is basedon that of PGA layer alone.) | | | | | |
| **: Measurement was impossible due to noticeable fragility caused during the retorting. | | | | | |

In view of the results shown in Table 1, the stretched films of Comparative Examples 1-3 obtained through stretching at ratios of 3.0 × 3.0 times at 45-80 °C and the stretched films of Comparative Examples 4 and 5 obtained through stretching at ratios of 4.0 × 4.0 times or 4.5 × 4.5 times caused an increase in crystal melting point (Tm) of 1-2 °C, compared with the unstretched film of Comparative Example 6 which temperature increase is however, not considered as a significant one. This is considered because the stretching intensity was insufficient, thus failing to exhibit a desired effect of intense stretching.

In contrast thereto, the stretched films of Examples 1-4 obtained through stretching at ratios of 4.0 × 4.0 times or 4.5 × 4.5 times at a stretching temperature of 45 °C or 60 °C exhibited an extremely remarkable increase in crystal melting point of 8-9 °C compared with the unstretched film of Comparative Example 6. This is considered attributable to an increase in crystallite size as a result of the intense stretching effect. Further, there were also observed an increase in crystalline orientation degree as measured by wide-angle X-ray diffractometry which may be attributable to an increase in orientation of crystal plane in the direction of molecular chains, and also increases in main dispersion and sub-dispersion peak temperatures according to dynamic viscoelasticity measurement which may be attributable to a tension of molecular chains at the amorphous parts. Corresponding thereto, the anti-impact force and energy were remarkably increased compared with those of Comparative Examples. These can be all regarded as the effects of the intense stretching of crystalline aliphatic polyester intended by the present invention.

Further, as shown in Table 2, the yet-unstretched film of Comparative Example 6 exhibited inferior gas-barrier property (PO₂) compared with the stretched films and further failed in the barrier property measurement due to excessive fragility after the retort treatment even at 105 °C. The stretched films of Comparative Examples 1-5 did not exhibit fragility but exhibited an inferior oxygen gas permeability of ca. 2 times after the retorting at 105 °C . From, these results of Comparative Examples, it is understood that the gas-barrier property and hot water resistance (anti-retort property) can be improved to some extent by the stretching. However, the stretched films of Comparative Examples 1-5, after the retorting at 120 °C , exhibited PO₂ values which were larger by one digit than those before the retorting, thus causing a remarkable lowering in gas-barrier property.

In contrast thereto, the stretched films of Examples 1-4 caused little lowering in gas-barrier property, and exhibited a good gas-barrier property as represented by a level of oxygen gas permeability (PO₂) comparable to the value before the retorting of the unstretched film (Comparative Example 6) even after the retorting at 120 °C .

Such improvements in gas-barrier property and hot water resistance (anti-retort property) can be understood as being attributable to increases in orientation and crystallinity due to intense stretching effected under appropriate conditions according to the present invention.

### [INDUSTRIAL APPLICABILITY]

As described above, according to the present invention, there is provided a stretched product of crystalline aliphatic polyester which is provided with increased orientation degree at not only amorphous parts but also at crystalline parts as represented by (a) a remarkably higher crystal melting point compared with the unstretched product, (b) an increase in sub-dispersion peak temperature according to dynamic viscoelasticity measurement, or (c) an increase in orientation degree according to wide-angle X-ray diffractometry and an increase in main dispersion peak temperature according to dynamic viscoelasticity measurement. As a result, the stretched product of crystalline polyester is provided with remarkable improvements in impact resistance and gas-barrier property inclusive of hot water resistance.

## Claims

1. A stretched product of crystalline aliphatic polyester, having a crystal melting point higher by at least 3 °C than that of an unstretched product thereof.

2. A stretched product according to Claim 1, having a crystal melting point higher by at least 5 °C than that of the unstretched product thereof.

3. A stretched product of crystalline aliphatic polyester, showing a sub-dispersion peak temperature of at least -46 °C according to dynamic viscoelasticity measurement in at least one direction thereof.

4. A stretched product according to any one of Claims 1 to 3, showing a main dispersion peak temperature of at least 67 °C according to dynamic viscoelasticity measurement in at least one direction thereof.

5. A stretched product according to any one of Claims 1 to 4, showing an orientation degree of at least 83 % as measured according to wide-angle X-ray diffractometry in at least one direction thereof.

6. A stretched product of crystalline aliphatic polyester, showing a main dispersion peak temperature of at least 67 °C according to dynamic viscoelasticity measurement in at least one direction thereof and an orientation degree of at least 83 % according to wide-angle X-ray diffractometry in at least one direction thereof.

7. A stretched product according to any one of Claims 1 to 6, satisfying the prescribed property in both of longitudinal and transverse directions thereof.

8. A stretched product according to any one of Claims 1 to 7, wherein the crystalline aliphatic polyester is a polymer of hydroxycarboxylic acid.

9. A stretched product according to Claim 8, wherein the crystalline aliphatic polyester is a glycolic acid polymer.

10. A stretched product according to any one of Claims 1 to 9, having a form of film.

11. A stretched product according to any one of Claims 1 to 9, having a form of bottle.

12. A stretched product according to any one of Claims 1 to 11, having a laminate form including a layer of the stretched aliphatic polyester and another polymer layer disposed in lamination.
